# DEMANDE DE BREVET EUROPEEN

(11) **EP 1 142 836 A1**
(43) Date de publication de la demande: **10.10.2001**
(21) Numéro de dépôt: 01870076.5
(22) Date de dépôt: 05.04.2001
(51) Int. Cl.: C02F 3/04, C02F 3/10

(54) **Procédé et installation pour la nitrification d'eaux polluées**

(30) Priorité: 05.04.2000 BE 200000243
(71) Demandeur: Fondation Universitaire Luxembourgeoise, 6700 Arlon (BE)
(72) Inventeur: Vasel, Jean Luc, 6852 Maissin (BE)
(74) Mandataire: Claeys, Pierre

(57) **Abrégé**

Procédé discontinu et cyclique de nitrification biologique de l'azote ammoniacal contenu dans des eaux polluées, par percolation de ces eaux sur un lit fixe de particules solides comprenant une couche de matière minérale granulaire dont au moins 25% en poids consiste en une matière poreuse composée essentiellement d'un ou plusieurs carbonates alcalino-terreux. Au cours d'une première phase une charge d'eau à traiter, alimentée à la partie supérieure dudit lit fixe, percole au travers de celui-ci; au cours d'une seconde phase, de l'air est amené à traverser le lit fixe de haut en bas.

## Description

La présente invention a pour objet un procédé d'épuration d'eaux usées ou d'autres eaux polluées et plus particulièrement un procédé de nitrification d'eau contenant de l'azote ammoniacal.

Pour l'épuration des eaux usées, effluents et autres eaux polluées, on a recours à divers procédés. Le choix du procédé le plus approprié à mettre en oeuvre dépend notamment
- de l'origine et de la composition des eaux à traiter (eaux usées d'origine urbaine, d'origine rurale, lixiviats de décharges publiques, rejet industriels divers, etc.);
- le débit d'eau à traiter;
- la destination des eaux traitées et le degré d'épuration souhaité (déversement dans un cours d'eau ou un lac, réutilisation industrielle, réutilisation comme eau potable, etc.).

La plupart des procédés d'épuration d'eaux usées comprennent actuellement trois phases :
- l'épuration primaire qui a pour but d'éliminer les grosses particules;
- l'épuration secondaire qui a pour but d'éliminer les constituants carbonés organiques; et
- l'épuration tertiaire qui a pour but d'éliminer certains constituants qui subsistent en solution ou en suspension dans les eaux traitées par l'épuration secondaire.

Il faut toutefois noter que, suivant les circonstances, l'une ou l'autre de ces trois phases d'épuration peut quelquefois être omise. C'est ainsi qu'on omet parfois l'épuration tertiaire lorsque les eaux traitées par l'épuration secondaire peuvent être réutilisées telles quelles ou que leur déversement dans un cours d'eau ou un lac ne pose pas de problème sérieux.
Par ailleurs, la phase d'épuration secondaire peut être omise lorsqu'on traite des effluents fortement chargés en azote ammoniacal et ne contenant pas ou peu de constituants carbonés organiques biologiquement assimilables (mais contenant éventuellement des constituants carbonés organiques réfractaires à l'assimilation biologique).

Au cours de la phase d'épuration tertiaire, on peut éliminer des eaux des composés azotés et phosphorés et éventuellement aussi des métaux lourds ou d'autres substances toxiques. Dans bien des cas, cette phase de l'épuration est limitée à l'élimination de l'azote et du phosphore et parfois même à l'élimination de l'azote seulement.

L'élimination plus ou moins complète des composés azotés des eaux peut se faire par des procédés physiques et/ou chimiques mais elle le plus souvent effectuée par des procédés biologiques qui sont généralement les plus efficaces.

L'élimination de l'azote par voie biologique se réalise classiquement en deux étapes, la première de ces étapes étant la nitrification (transformation de l'azote ammoniacal en nitrite, puis en nitrate), la seconde étape étant la dénitrification (transformation du nitrate en azote gazeux).

La présente invention concerne essentiellement la première de ces deux étapes de l'élimination de l'azote, à savoir la nitrification.

La nitrification biologique des composés azotés contenus dans l'eau à traiter (consistant essentiellement en azote ammoniacal) se fait grâce à deux genres de bactéries : Nitrosomonas et Nitrobacter. La première de ces bactéries transforme l'ammonium en nitrite et la seconde bactérie transforme le nitrite en nitrate.

La réaction chimique de nitrification est une réaction d'oxydation et nécessite donc un apport d'oxygène.

Au point de vue technique, les difficultés que l'on rencontre lors de la nitrification biologique de l'azote ammoniacal contenu dans des eaux polluées, proviennent notamment du fait que cette nitrification biologique entraîne une acidification du milieu.

Or, les bactéries nitrifiantes n'agissent efficacement qu'à un pH légèrement basique (pH optimum de 7,5 à 8,6).

En dessous d'un pH de 7,5, la réaction biologique est fortement ralentie et elle peut être considérée comme entièrement arrêtée en dessous d'un pH de 6, quoique à cette valeur, une certaine adaptation est possible, si les conditions sont stables.

Dans certains procédés de nitrification biologique, on ajoute des quantités dosées de substances basiques (lait de chaux, par exemple) aux eaux à traiter, pour maintenir le pH à une valeur appropriée. Une telle opération est toutefois assez difficile et est une source d'ennuis lorsqu'elle n'est pas effectuée avec la précision nécessaire.

Divers types de nitrification biologique ont été mis au point et de nombreux types d'installation ont été réalisés pour exécuter ces procédés. D'une manière générale, ces procédés et installations présentent toutefois des inconvénients assez sérieux. Certains de ces procédés et installations ont des possibilités d'utilisation assez limitées (notamment pour le traitement d'eaux polluées ayant une teneur en azote ammoniacal assez basse). Mais dans bien des cas, les inconvénients sont surtout d'ordre économique et découlent surtout d'un manque de simplicité de l'installation et de son fonctionnement, ce qui entraîne des frais élevés pour réaliser l'installation et/ou pour assurer son fonctionnement (consommation d'énergie, main d'oeuvre pour la surveillance et la maintenance).

Le but de la présente invention est de fournir un procédé et une installation pour la nitrification biologique de l'azote ammoniacal contenu dans des eaux polluées ne présentant pas les principaux inconvénients des procédés et installations antérieurement connus.

La présente invention a pour objet un procédé de nitrification biologique de l'azote ammoniacal contenu dans des eaux polluées, par percolation de ces eaux sur un lit fixe de particules solides. Dans le procédé suivant l'invention, ce lit fixe comprend au moins une couche de matière minérale granulaire, au moins 25% en poids de cette matière minérale granulaire; consistant en une matière poreuse composée essentiellement d'un ou plusieurs carbonates alcalino-terreux.

Le procédé suivant l'invention est discontinu et cyclique et comporte :
- une première phase au cours de laquelle une charge d'eau à traiter est alimentée à la surface supérieure du lit fixe de particules et percole au travers de ce lit fixe, l'eau ainsi traitée pouvant être récupérée sous le lit fixe, et
- une seconde phase au cours de laquelle de l'air est amené à traverser le lit fixe de particules de haut en bas, du fait qu'une différence de pression d'air est créée entre la partie supérieure et la partie inférieure de ce lit fixe.

Suivant une forme d'exécution préférée de l'invention, ladite matière poreuse composée essentiellement d'un ou plusieurs carbonates alcalino-terreux, est constituée par du lithothamnium calcareum.

Le lithothamnium calcareum est un matériau d'origine organique et marine (algues monocellulaires) qui présente une forte porosité (40 à 45%) et est constituée essentiellement de carbonate de calcium et de carbonate de magnésium, dans un rapport d'environ 10 à 1 respectivement. Ce matériau qui est commercialisé sous le nom de lithothamne semoulette, a une densité apparente d'environ 1,05 à 1,08.

De par sa structure poreuse, le lithothamnium calcareum est un excellent support pour la fixation de bactéries et présente une grande surface de contact avec l'eau à traiter.

En outre, de par sa composition chimique, le lithothamnium calcareum maintient le pH du milieu à un niveau qui permet la poursuite de l'action des bactéries nitrifiantes. Par ailleurs, du fait de sa réaction avec l'acide produit lors de la nitrification, le lithothamnium est une source de carbone inorganique (CO₂) pour les bactéries nitrifiantes autotrophes.

Ladite couche de matière minérale granulaire peut être constituée en totalité de lithothamnium calcareum.

La couche de matière minérale granulaire peut cependant aussi être constituée d'un mélange de lithothiamnium calcareum et d'une ou plusieurs autres matières minérales granulaires.

Une telle forme d'exécution qui permet de réduire le coût du lit fixe de particules peut donner des résultats tout à fait satisfaisants, en particulier pour certaines applications (notamment lorsque la teneur en azote ammoniacal de l'eau à traiter n'est pas trop élevée 40 mg/l<N-NH4<500 mg/l).

C'est ainsi que 0 à 75% en poids de ladite matière minérale granulaire peut consister en sable en calcaire, en coquillages broyés ou en un mélange de ces matières. Le calcaire dont il est question ici peut notamment être du calcaire de carrière, broyé et calibré. Les coquillages broyés offrent certains avantages car ce matériau a une densité plus basse que le sable ou le calcaire de carrière et il comprend également du calcaire qui peut participer à la stabilisation du pH du milieu.

L'efficacité du procédé dépend notamment de la perméabilité (porosité) de la couche de matière minérale granulaire, dans son ensemble. Il importe en effet que la vitesse de percolation des eaux à traiter qui traversent cette couche assure un temps de contact suffisamment long des eaux avec la matière granulaire, tout en permettant un débit suffisant des eaux qui traversent cette couche. Ladite couche doit par ailleurs aussi être suffisamment perméable pour permettre une aération efficace de cette couche au cours de ladite seconde phase du procédé.

Il est avantageux qu'au moins 95% en poids de ladite matière minérale granulaire ait une granulométrie comprise entre 0,3 mm et 3 mm. Il est préférable qu'au moins 95% en poids de ladite matière minérale granulaire ait une granulométrie comprise entre 0,5 mm et 2 mm.

Le lit fixe de particules solides comprend de préférence une seule couche de matière minérale granulaire d'une hauteur comprise entre environ 0,75 m et environ 1,50 m. Cette couche a avantageusement une hauteur d'environ 1 m.

Il est avantageux qu'au début de la première phase du procédé, la charge d'eau à traiter soit alimentée à la partie supérieure du lit fixe avec un débit suffisamment important pour qu'en peu de temps une couche d'eau apparaisse au-dessus de ce lit fixe.

Au début de la première phase du procédé, la charge d'eau à traiter est, de préférence, alimentée à la partie supérieure du lit fixe, de manière telle qu'une lame d'eau d'une hauteur de 5 cm à 30 cm apparaisse en moins de 5 minutes au-dessus du lit fixe de particules.

Suivant un mode d'exécution particulier, cette charge d'eau est alimentée à la partie supérieure du lit fixe, de manière telle qu'une lame d'eau d'une hauteur de 5 cm à 15 cm apparaisse en moins de 4 minutes au-dessus du lit fixe de particules.

Au cours de la seconde phase du procédé , de l'air est amené à traverser de haut en bas le lit fixe de particules. Suivant une forme d'exécution préférée de l'invention, ce passage d'air au travers du lit fixe de particules est obtenu en créant une dépression d'air à la partie inférieure de ce lit fixe, la partie supérieure de ce lit fixe étant en communication directe avec l'air ambiant.

Le temps pendant lequel on provoque ce passage d'air au travers du lit fixe de particules peut varier suivant les circonstances (par exemple : de 5 à 30 minutes ou davantage).

Le temps d'aération optimum, dépend notamment du volume d'eau (par unité de surface du lit de particules) qu'on a fait percoler au travers du lit de particules, et de la teneur en azote ammoniacal de l'eau à traiter.

Pour que l'azote ammoniacal des eaux polluées à traiter puisse être nitrifiée par percolation de ces eaux sur un lit fixe de particules conforme à l'invention, il faut évidemment que des bactéries nitrifiantes (Nitrosomas et Nitrobacter) soient présentes dans le lit fixe de matière minérale granulaire. En fait, ces bactéries sont naturellement présentes dans les eaux polluées contenant de l'azote ammoniacal.

Lors de la première mise en route d'une installation de nitrification, ces bactéries nitrifiantes contenues dans les eaux que l'on fait percoler au travers du lit fixe comprenant la matière minérale granulaire se fixent sur cette dernière. La matière poreuse carbonatée contenue dans le lit fixe constitue un très bon support pour ces bactéries et favorise la multiplication de ces bactéries autotrophes.

L'invention a également pour objet une installation pour la nitrification biologique de l'azote ammoniacal contenu dans des eaux polluées, cette installation comportant :
- au moins une enceinte, comportant des parois latérales et un fond, contenant un lit fixe de matière solide particulaire,
- des moyens d'alimentation aptes à alimenter, de manière discontinue, des charges d'eau à traiter à la partie supérieure du lit fixe de matière solide particulaire,
- des moyens pour récolter, sous ledit lit fixe, les eaux qui ont percolé au travers de celui-ci.

Ledit lit fixe comprend au moins une couche de matière minérale granulaire, au moins 25% en poids de cette matière minérale granulaire consistant en une matière poreuse composée essentiellement d'un ou plusieurs carbonates, alcalino-terreux.

L'installation suivant l'invention comporte en outre :
- des moyens d'aération aptes à créer une différence de pression d'air entre la partie supérieure et la partie inférieure dudit lit fixe, de manière à amener de l'air à traverser ce lit fixe de haut en bas,
- des moyens pour commander le fonctionnement et l'interruption de fonctionnement desdits moyens d'alimentation et desdits moyens d'aération.

Suivant une forme de réalisation préférée de l'installation suivant l'invention, ladite matière poreuse composée essentiellement d'un ou plusieurs carbonates alcalino-terreux est constituée par du lithothamnium calcareum.

Dans une installation suivant l'invention, ladite couche de matière minérale granulaire peut être constituée en totalité de lithothamnium calcareum, mais elle peut également être constituée d'un mélange de lithothamnium calcareum et d'une ou plusieurs autres matières minérales granulaires. C'est ainsi que de 0 à 75% en poids de ladite matière minérale granulaire peut notamment consister en sable, en calcaire, en coquillage broyés ou en un mélange de ces matières.

Pour que la couche de matière minérale granulaire, dans son ensemble, présente une perméabilité appropriée, il est avantageux qu'au moins 95% en poids de cette matière granulaire ait une granulométrie comprise entre 0,3 mm et 3 mm et de préférence comprise entre 0,5 mm et 2 mm.
Ledit lit fixe comprend avantageusement une couche de matière minérale granulaire d'une hauteur comprise entre environ 0, 75 m et environ 1,50 m, de préférence environ 1 m.

Pour assurer un bon drainage de l'eau qui a percolé au travers de la couche de matière minérale granulaire, la partie inférieure dudit lit fixe est avantageusement constituée d'une couche de gravier, au moins une couche de matière minérale granulaire étant située au-dessus de cette couche de gravier.

Un géotextile est avantageusement situé entre ladite couche de gravier et la couche de matière minérale granulaire située au-dessus.

Ladite couche de gravier qui a, par exemple, une granulométrie comprise entre 2 cm et 4 cm, a de préférence, une hauteur comprise entre environ 5 cm et environ 15 cm.

De manière avantageuse, lesdits moyens d'alimentation sont aptes à alimenter, à la partie supérieure du lit fixe, une charge d'eau à traiter, de telle manière qu'une lame d'eau d'une hauteur de 5 à 30 cm apparaisse en moins de 5 minutes au-dessus du lit fixe de particules. Ces moyens d'alimentation sont de préférence aptes à alimenter, à la partie supérieure du lit fixe une charge d'eau à traiter, de telle manière qu'une lame d'eau d'une hauteur de 5 à 15 cm apparaisse en moins de 4 minutes au-dessus du lit fixe de particules.

Les moyens d'alimentation doivent donc être aptes à alimenter rapidement une charge d'eau à traiter à la partie supérieure du lit fixe. Mais il importe toutefois que le déversement de ces eaux perturbe le moins possible la surface supérieure du lit de particules. Pour que les eaux à traiter puissent percoler de manière régulière au travers de l'ensemble de la couche de matière minérale granulaire, il faut, en effet, éviter que le déversement des eaux à traiter ne forme à la surface supérieure de cette couche des cratères et dès lors des passages privilégiés pour la percolation des eaux.

De manière avantageuse, les moyens d'alimentation comportent dès lors un système de brise-jet apte à empêcher que l'alimentation d'une charge d'eau à traiter, à la partie supérieure du lit fixe, ne déforme de manière substantielle la surface supérieure de ce lit fixe.

Suivant une forme de réalisation préférée de l'installation, lesdits moyens d'aération sont aptes à créer une dépression d'air à la partie inférieure du lit fixe de particules, la partie supérieure de ce lit fixe étant en communication directe avec l'air ambiant. Ces moyens d'aération comportent par exemple un ventilateur.

Le procédé et l'installation de nitrification suivant l'invention peuvent être utilisés pour le traitement d'eaux polluées très diverses. Il importe toutefois que les eaux à traiter contiennent peu de matière en suspension et que leur teneur en constituants carbonés organiques soit faible.

Si ces conditions ne sont pas remplies dès le départ, les eaux polluées doivent au préalable être traitées pour éliminer les matières en suspension et pour réduire de manière substantielle leur teneur en constituants carbonés inorganiques (réduction de la DBO).

Le procédé et l'installation suivant l'invention sont particulièrement avantageux pour le traitement d'eaux polluées ayant une teneur en azote ammoniacal assez élevée, comme par exemple les lixiviats de décharges publiques ou les eaux de pisciculture.

La technique suivant l'invention est très avantageuse, notamment à cause de la simplicité et du coût réduit de l'installation, de son fonctionnement et de sa maintenance. Tout en étant très efficace, le procédé offre une grande souplesse et adaptabilité en supportant notamment d'assez importantes variations du débit et de la charge de l'eau à traiter.
D'autres particularités et avantages de l'invention découleront de la description faite ci-après, à titre d'exemples non limitatifs, d'une installation et d'un procédé conformes à cette invention.

### INSTALLATION

Une installation suivant l'invention comprend trois réservoirs et deux réacteurs, à savoir :
- un réservoir d'entrée RE
- un premier réacteur-percolateur RA,
- un réservoir intermédiaire RI,
- un second réacteur-percolateur RB,
- un réservoir de sortie RS.

Tous ces réservoirs et ces réacteurs ont, en plan, une forme rectangulaire et ont des parois latérales verticales.
Le gros oeuvre de cette installation peut être réalisé en béton armé.

Le réservoir d'entrée RE destiné à contenir les eaux qui arrivent à la station d'épuration et qui sont destinées à être traitées par l'installation. Ce réservoir RE, qui a une longueur de 9 m, une largeur de 1,5 m et une profondeur de 1 m, a donc un volume intérieur de 13,5 m³, mais un trop-plein placé à 0,93 m du fond limite sa capacité réelle à 12,5 m³.

Le réservoir d'entrée RE est équipé d'une pompe centrifuge auto-amorçante d'une capacité de 300 m³/h et d'une sonde de niveau "bas" qui est branchée sur le circuit d'alimentation électrique de la pompe et qui est ainsi apte à arrêter la pompe lorsqu'un volume prédéterminé d'eau a été débité par celle-ci. Cette sonde est montée sur une glissière verticale fixée dans le réservoir RE, ce qui permet de faire varier, à volonté, le volume de chaque charge d'eau alimentée par la pompe.

Le réservoir d'entrée RE est recouvert d'un caillebotis métallique.

Le premier réacteur-percolateur RA présente les dimensions internes suivantes : 10 m de longueur, 6 m de largeur et 2,2 m de hauteur. Ce réacteur RA présente plusieurs parties, de bas en haut :
- une chambre de récupération d'environ 17 m³, réalisée à l'aide de caillebotis en résine isophtalique (hauteur : 55 mm) posée sur une série de 18 plats bétonnés de 0,3 m de hauteur (solidaires du radier du réacteur RA), ainsi que sur un périmètre bétonné; le caillebotis est recouvert d'un géotextile à mailles fines retenant la couche drainante;
- une couche drainante constituée d'une couche de gravier (calibre 2-4 cm) d'une dizaine de cm de hauteur; la couche drainante est recouverte d'un géotextile à mailles fines retenant la couche de matière granulaire située au-dessus;
- une couche de lithothamnium calcareum granulaire dont au moins 95% a une granulométrie comprise entre 0,5 mm et 2 mm; cette couche de lithothamnium calcareum qui a une hauteur d'environ 1 m constitue un élément essentiel de l'installation.

A sa partie supérieure (c'est-à-dire au-dessus de la couche de lithothamnium calcareum), le réacteur-percolateur RA est équipé d'un dispositif d'alimentation qui comprend une dizaine de conduites de distribution branchées sur une conduite principale raccordée à la sortie de la pompe centrifuge dont est équipé le réservoir d'entrée RE. Les extrémités libres des conduites de distribution sont réparties de manière régulière au-dessus de la surface supérieure de la couche de lithothamnium calcareum. Pour que le déversement des eaux à traiter, délivrées par ce dispositif d'alimentation, perturbe le moins possible la surface supérieure de cette couche, un système de brise-jet est prévu à l'extrémité libre de chaque conduite de distribution.

Le réservoir intermédiaire RI est installé parallèlement le long d'un des petits côtés (6 m) du premier réacteur-percolateur RA. Ce réservoir RI a une longueur de 6 m (parallèle au petit côté du réacteur RA), une largeur de 0,5 m et une hauteur de 1 m. Le réservoir RI est en communication avec la chambre de récupération du réacteur RA, par l'intermédiaire d'une chambre siphoïde qui est conçue dans le bas du voile de béton constituant la face latérale du réacteur RA. Trois ouvertures de 0,8 x 0,1 m ménagées à la base de ce voile de béton sont réparties sur la largueur de cette face latérale et permettent à l'eau contenue dans la chambre de récupération du réacteur RA de s'écouler vers le réservoir intermédiaire RI, en passant par ladite chambre siphoïde.

Grâce à cette chambre siphoïde, la chambre de récupération située à la partie inférieure du réacteur RA constitue une enceinte qui n'est pas en contact direct avec l'air ambiant. Un ventilateur électrique, raccordé à une conduite d'un diamètre de 7,5 cm, aboutissant dans la partie supérieure de la chambre de récupération (au-dessus du niveau que l'eau peut atteindre dans cette chambre), permet d'aspirer de l'air hors de cette chambre de récupération et d'y créer et maintenir ainsi une pression inférieure à celle de l'air ambiant.

Le réservoir intermédiaire RI est équipé d'une pompe centrifuge auto-amorçante d'une capacité de 300 m³/h et d'une sonde de niveau "bas" qui peut commander l'arrêt de la pompe.

Le second réacteur-percolateur RB, identique au réacteur RA, est installé à côté du réservoir intermédiaire RI, un petit côté (6 m) du réacteur RB longeant le grand côté (6 m) du réservoir RI. Le réservoir RI est donc situé entre les deux réacteurs RA et RB.

Le réservoir de sortie RS, en substance identique au réservoir intermédiaire RI, est installé parallèlement le long du petit côté (6 m) du second réacteur RB qui est situé à l'opposé du réservoir intermédiaire RI. Le second réacteur RB est donc situé entre le réservoir intermédiaire RI et le réservoir de sortie RS.

On comprendra que l'installation permet :
- d'alimenter, de manière discontinue, des charges d'eau à traiter (par exemple : 4 m³, 8 m³ ou 12³) à la partie supérieure du premier réacteur-percolateur RA, ces charges d'eau étant prélevées dans le réservoir d'entrée RE au moyen de la pompe centrifuge qui y est installée; ces eaux traversent ce réacteur RA de haut en bas et sont recueillies dans la chambre de récupération et dans le réservoir intermédiaire RI;
- d'alimenter, de manière discontinue, des charges d'eau (par exemple 4 m³, 8 m³ ou 12 m³) à traiter par le second réacteur RB, à la partie supérieure de celui-ci, ces charges d'eau étant prélevées dans le réservoir intermédiaire RI au moyen de la pompe centrifuge qui y est installée; ces eaux traversent ce réacteur RB de haut en bas et sont recueillies dans la chambre de récupération et dans le réservoir de sortie RS.

Entre deux périodes de percolation d'eau dans un réacteur (RA ou RB), l'installation permet également de créer une dépression d'air dans la chambre de récupération, grâce au ventilateur qui est raccordé à cette chambre, et d'amener ainsi de l'air à traverser de haut en bas le lit fixe de particules contenu dans ce réacteur. Entre deux périodes de percolation d'eau, l'installation permet de provoquer une période d'aération ou, de préférence, deux ou plusieurs périodes d'aération séparées par des périodes d'arrêt du ventilateur.

Les eaux traitées récoltées dans la chambre de récupération du second réacteur RB et dans le réservoir de sortie RS, doivent de là être conduites vers un autre poste de la station d'épuration (par exemple vers un réacteur de dénitrification) ou vers une autre destination.

Le ou les postes d'épuration ou autres destinations éventuellement prévues en aval du réservoir de sortie RS, sortent du cadre de la présente invention et ne seront donc pas commentés ici.

Afin de pouvoir conduire ces eaux traitées vers un éventuel poste d'épuration ou autre destination situé en aval, le réservoir de sortie RS est équipé d'une pompe centrifuge auto-amorçante et d'une sonde de niveau "bas" qui peut commander l'arrêt de la pompe.
L'ensemble de l'installation est commandé par un poste central de commande et de contrôle automatisé actionnant de manière programmée les périodes de fonctionnement des pompes et des ventilateurs.

### PROCEDE

Une installation telle que décrite ci-dessus peut être utilisée pour des applications assez diverses, tant pour ce qui concerne le type d'eau polluée à traiter (en particulier pour ce qui concerne leur teneur en azote ammoniacal) que pour ce qui concerne les volumes d'eau à traiter par jour.

L'installation peut ainsi être utilisée pour le traitement tertiaire d'eaux usées domestiques. L'installation s'est cependant montrée particulièrement avantageuse pour le traitement d'eaux polluées à forte concentration en azote ammoniacal.

En faisant varier le nombre de charges d'eau alimentées sur les réacteurs par jour, et le volume de ces charges d'eau, le fonctionnement de l'installation peut être adapté, de manière très souple, à des variations de débit journalier et à la nature des eaux à traiter.

C'est ainsi qu'on peut, par exemple, prévoir de 2 à 6 charges d'eau alimentées sur chaque réacteur par jour.

La quantité d'eau polluée traitée par jour peut par exemple varier de 6 à 36 m³, ce qui correspond à une alimentation de 0,1 à 0,6 m³ par jour et par m² de surface de filtration d'un réacteur.

L'exemple décrit ci-après concerne le traitement de lixiviat d'une décharge publique.

Une analyse de ce lixiviat (échantillon prélevé dans le réservoir d'entrée RE) donne les résultats suivants :

| | |
|---|---|
| DCO : | 2800 mg/l |
| N-NH₄⁺ : | 1180 mg/l |
| DBO₅ : | 190 mg/l |
| Conductivité : | 15 mS/cm |
| pH : | 7,6 |

Le débit de lixiviat à traiter étant d'environ 20 m³ par jour, on fait fonctionner l'installation suivant un rythme d'alimentation de deux charges de 10 m³ par jour.

Pour la description du procédé, on désigne par 0h le début d'un cycle de fonctionnement qui commence par l'alimentation d'une charge d'eau.
- 0h00 :: mise en action de la pompe centrifuge du réservoir d'entrée RE;
- 0h02 :: la pompe du réservoir RE s'arrête après avoir alimenté 10 m³ de lixiviat à la partie supérieure du premier réacteur RA, ce qui correspond à une lame d'eau d'une hauteur d'environ 16 à 17 cm au-dessus de la surface supérieure du lit de lithothamnium calcareum.
Au même moment, la pompe du réservoir intermédiaire RI est mise en marche. Lorsque, après environ 2 min de fonc- tionnement (soit à environ 0h04), le niveau dans le réservoir
RI atteint la sonde de niveau "bas", la pompe de ce réservoir s'arrête après avoir alimenté environ 10 m³ d'eau à la partie supérieure du second réacteur RB;
- 2h00 :: la durée de percolation de la charge d'eau au-travers de chacun des deux réacteurs est d'environ 1 à 2 heures. Après 2 heures, on peut compter que cette percolation est termi- née;
- 2h30 :: mise en fonctionnement des ventilateurs des deux réacteurs (RA et RB);
- 2h50 :: arrêt des deux ventilateurs;
- 6h30 :: mise en fonctionnement des deux ventilateurs;
- 6h50 :: arrêt des deux ventilateurs;
- 10h30 :: mise en fonctionnement des deux ventilateurs;

- 10h50 :: arrêt des deux ventilateurs;
- 12h00 :: fin du premier cycle de fonctionnement de l'installation; le second cycle de fonctionnement (identique au précédent) commence par la mise en action de la pompe du réservoir d'entrée RE.

Une analyse de l'eau dans le réservoir intermédiaire montre une teneur en azote ammoniacal de 300-400 mg/l.

Une analyse de l'eau contenue dans le réservoir de sortie RS donne les résultats suivants :

| | |
|---|---|
| DCO : | 2150 mg/l |
| DBO₅: | 10 mg/l |
| N-NH₄⁺ : | 55 mg/l |
| conductivité : | 13 mS/cm |
| pH : | 6,9. |

Le système de fonctionnement de l'installation décrit ci-dessus n'est donné qu'à titre d'exemple et peut subir de nombreuses modifications.

C'est ainsi qu'on peut notamment augmenter le nombre de charges d'eau par jour (par exemple : quatre charges de 8 m³ par jour).

La vitesse de percolation de l'eau au travers du lit de particules de lithothamnium calcareum est nécessairement assez lente pour permettre aux bactéries contenues dans et sur ces particules d'exercer leur action. Cependant, des phénomènes d'adsorption augmentent le temps de séjour des polluants au sein du massif filtrant, augmentant ainsi le temps de contact avec les bactéries.

A la fin de la période de percolation, le débit de percolation devient cependant inutilement lent et la fin de la période de percolation peut éventuellement être raccourcie en faisant fonctionner les ventilateurs une première fois avant que la percolation ne soit complètement terminée. En effet, la dépression d'air qu'un ventilateur en fonctionnement crée dans la chambre de récupération d'un réacteur, permet d'augmenter le débit de percolation. Ceci peut notamment être avantageux lorsqu'on désire augmenter la charge hydraulique journalière de l'installation en l'alimentant avec cinq ou six charges d'eau par jour.

## Revendications

1. Procédé de nitrification biologique de l'azote ammoniacal contenu dans des eaux polluées, par percolation de ces eaux sur un lit fixe de particules solides,
**caractérisé en ce que** ledit lit fixe comprend au moins une couche de matière minérale granulaire, au moins 25% en poids de cette matière minérale granulaire consistant en une matière poreuse composée essentiellement d'un ou plusieurs carbonates alcalino-terreux,
le procédé étant discontinu et cyclique et comportant :
- une première phase au cours de laquelle une charge d'eau à traiter est alimentée à la partie supérieure du lit fixe de particules et percole au travers de ce lit fixe, l'eau ainsi traitée pouvant être récupérée sous le lit fixe,
- une seconde phase au cours de laquelle de l'air est amené à traverser le lit fixe de particules de haut en bas, du fait qu'une différence de pression d'air est créée entre la partie supérieure et la partie inférieure de ce lit fixe.

2. Procédé suivant la revendication 1, **caractérisé en ce que** ladite matière poreuse composée essentiellement d'un ou plusieurs carbonates alcalino-terreux, est constituée par du lithothamnium calcareum.

3. Procédé suivant l'une quelconque des revendications précédentes, **caractérisé en ce que** de 0 à 75% en poids de ladite matière minérale granulaire consiste en sable.

4. Procédé suivant l'une quelconque des revendications précédentes **caractérisé en ce que** de 0 à 75% en poids de ladite matière minérale granulaire consiste en calcaire.

5. Procédé suivant l'une quelconque des revendications précédentes, **caractérisé en ce que** de 0 à 75% en poids de ladite matière minérale granulaire consiste en coquillages broyés.

6. Procédé suivant l'une quelconque des revendications précédentes, **caractérisé en ce qu'**au moins 95% en poids de ladite matière minérale granulaire a une granulométrie comprise entre 0,3 mm et 3 mm.

7. Procédé suivant la revendication 6n **caractérisé en ce qu'**au moins 95% en poids de ladite matière minérale granulaire a une granulométrie comprise entre 0,5 mm et 2 mm.

8. Procédé suivant l'une quelconque des revendications précédentes, **caractérisé en ce que** le lit fixe comprend une couche de matière minérale granulaire d'une hauteur comprise entre environ 0,75 m et environ 1,50 m.

9. Procédé suivant la revendication 8, **caractérisé en ce que** le lit fixe comprend une couche de matière minérale granulaire d'une hauteur d'environ 1 m.

10. Procédé suivant l'une quelconque des revendications précédentes, **caractérisé en ce qu'**au début de la première phase du procédé, la charge d'eau à traiter est alimentée à la partie supérieure du lit fixe, de manière telle qu'une lame d'eau d'une hauteur de 5 cm à 30 cm apparaisse, en moins de 5 minutes au-dessus du lit fixe de particules.

11. Procédé suivant la revendication 10, **caractérisé en ce qu'**au début de la première phase du procédé, la charge d'eau à traiter est alimentée à la partie supérieure du lit fixe, de manière telle qu'une lame d'eau d'une hauteur de 5 cm à 15 cm apparaisse en moins de 4 minutes au-dessus du lit fixe de particules.

12. Procédé suivant l'une quelconque des revendications précédentes, **caractérisé en ce que**, au cours de la seconde phase, une dépression d'air est créée à la partie inférieure du lit fixe de particules, la partie supérieure de ce lit fixe étant en communication directe avec l'air ambiant.

13. Installation pour la nitrification biologique de l'azote ammoniacal contenu dans des eaux polluées, cette installation comportant :
- au moins une enceinte, comportant des parois latérales et un fond, contenant un lit fixe de matière solide particulaire,
- des moyens d'alimentation aptes à alimenter, de manière discontinue, des charges d'eau à traiter à la partie supérieure du lit fixe de matière solide particulaire,
- des moyens pour récolter, sous ledit lit fixe, les eaux qui ont percolé au travers de celui-ci,
**caractérisé en ce que** ledit lit fixe comprend au moins une couche de matière minérale granulaire, au moins 25% en poids de cette matière granulaire consistant en une matière poreuse composée essentiellement d'un ou plusieurs carbonates alcalino-terreux,
l'installation comportant en outre :
- des moyens d'aération aptes à créer une différence de pression d'air entre la partie supérieure et la partie inférieure dudit lit fixe, de manière à amener de l'air à traverser ce lit fixe de haut en bas,
- des moyens pour commander le fonctionnement et l'interruption de fonctionnement desdits moyens d'alimentation et desdits moyens d'aération.

14. Installation suivant la revendication 13, **caractérisée en ce que** ladite matière poreuse composée essentiellement d'un ou plusieurs carbonates alcalino-terreux est constituée par du lithothamnium calcareum.

15. Installation suivant l'une quelconque des revendications 13 et 14, **caractérisée en ce que** de 0 à 75% en poids de ladite matière minérale granulaire consiste en sable.

16. Installation suivant l'une quelconque des revendications 13 à 15, **caractérisée en ce que** de 0 à 75% en poids de ladite matière minérale granulaire consiste en calcaire.

17. Installation suivant l'une quelconque des revendications 13 à 16, **caractérisée en ce que** de 0 à 75% en poids de ladite matière minérale granulaire consiste en coquillages broyés.

18. Installation suivant l'une quelconque des revendications 13 à 17, **caractérisée en ce qu'**au moins 95% en poids de ladite matière minérale granulaire a une granulométrie comprise entre 0,3 mm et 3 mm.

19. Installation suivant la revendication 20, **caractérisée en ce qu'**au moins 95% en poids de ladite matière minérale granuleuse a une granulométrie comprise entre 0,5 mm et 2 mm.

20. Installation suivant l'une quelconque des revendications 13 à 18, **caractérisée en ce que** le lit fixe comprend une couche de matière minérale granulaire d'une hauteur comprise entre environ 0,75 m et environ 1,50 m.

21. Installation suivant la revendication 20, **caractérisée en ce que** le lit fixe comprend une couche de matière minérale granulaire d'une hauteur d'environ 1 m.

22. Installation suivant l'une quelconque des revendications 13 à 21, **caractérisée en ce que** la partie inférieure dudit lit fixe est constitué d'une couche de gravier, au moins une couche de matière minérale granulaire étant située au-dessus de cette couche de gravier.

23. Installation suivant la revendication 22, **caractérisée en ce qu'**un géotextile est situé entre ladite couche de gravier et ladite couche de matière minérale granulaire située au-dessus de cette couche de gravier.

24. Installation suivant l'une quelconque des revendications 22 et 23, **caractérisée en ce que** ladite couche de gravier a une hauteur comprise entre environ 5 cm et environ 15 cm.

25. Installation suivant l'une quelconque des revendications 22 à 24, **caractérisée en ce que** le gravier constituant ladite couche de gravier a une granulométrie comprise entre environ 2 cm et environ 4 cm.

26. Installation suivant l'une quelconque des revendications 13 à 25, **caractérisée en ce que** lesdits moyens d'alimentation sont aptes à alimenter, à la partie supérieure du lit fixe, une charge d'eau à traiter, de telle manière qu'une lame d'eau d'une hauteur de 5 cm à 30 cm apparaisse en moins de 5 minutes au-dessus du lit fixe de particules.

27. Installation suivant la revendication 26, **caractérisée en ce que** lesdits moyens d'alimentation sont aptes à alimenter, à la partie supérieure du lit fixe, une charge d'eau à traiter, de telle manière qu'une lame d'eau d'une hauteur de 5 cm à 15 cm apparaisse au moins de 4 minutes au-dessus du lit fixe de particules.

28. Installation suivant l'une quelconque des revendications 13 à 27, **caractérisé en ce que** lesdits moyens d'alimentation comportent un système de brise-jet apte à empêcher que l'alimentation d'une charge d'eau à traiter, à la partie supérieure du lit fixe, ne déforme de manière substantielle la surface supérieure de ce lit fixe.

29. Installation suivant l'une quelconque des revendications 13 à 28, **caractérisée en ce que** lesdits moyens d'aération sont aptes à créer une dépression d'air à la partie inférieure du lit fixe de particules, la partie supérieure de ce lit fixe étant en communication directe avec l'air ambiant.

30. Installation suivant la revendication 29, **caractérisée en ce que** lesdits moyens d'aération aptes à créer une dépression d'air à la partie inférieure du lit fixe de particules, comportent un ventilateur.
